# EUROPEAN PATENT APPLICATION

(11) **EP 2 703 870 A1**
(43) Date of publication of application: **05.03.2014**
(21) Application number: 13164870.1
(22) Date of filing: 23.04.2013
(51) Int. Cl.: G02B 19/00

(54) **Light-emitting apparatus**

(30) Priority: 21.08.2012 TW 101130316
(71) Applicant: Aether Systems Inc., Taipei City 11492 (TW)
(72) Inventor: Chou, Yen-Chun, 11492 Taipei city (TW)
(74) Representative: von Kreisler Selting Werner

(57) **Abstract**

A light-emitting apparatus includes at least one light-emitting unit and a lens. The lens includes an accommodating portion, and at least a part of the light-emitting unit is disposed to the accommodating portion. The accommodating portion has a light incident surface, and the ratio of a distance from the light incident surface to the light-emitting unit to a side length of the light-emitting unit is less than 0.5. Thereby, a backlight module using the light-emitting diode (LED) as the light source can emit uniform light, and also the number of the required LED can be decreased.

## Description

### BACKGROUND OF THE INVENTION

### Field of Invention

The disclosed embodiments relate to a light-emitting apparatus and, in particular, to a light-emitting apparatus having a direct-type backlight module of a near-field design.

### Related Art

The light-emitting diode (LED) is a kind of light source characterized by smaller size, less heat generated, lower power consumption and longer lifespan, and it is improved continuously in luminous intensity and decreased in the cost for the sake of the progress of manufacturing technologies. Therefore, the LED has been gradually applied to various lighting apparatuses, and it can replace the conventional light sources in the future to become the most important lighting device in the lighting apparatus.

However, the direct-type backlight module of the liquid crystal display (LCD) apparatus using LEDs as the light source still has some problems as follow. A commonly used LED has a light-emitting angle of 120°, and that means the light emitted by the LED has higher directivity, i.e. less scattering angle. Hence, the LED is often used with a secondary lens (also called back light lens) for increasing the viewing angle thereof.

If the secondary lens is well designed, the number of the required LED in the backlight module is decreased and thus the material cost is also decreased.

Therefore, it is an important subject to provide a light-emitting apparatus including a lens that can provide uniform light.

### SUMMARY OF THE INVENTION

In view of the foregoing subject, an objective of this disclosure is to provide a light-emitting apparatus including a lens that can provide uniform light.

To achieve the above objective, a light-emitting apparatus according to this disclosure includes at least one light-emitting unit and a lens. The lens includes an accommodating portion, and at least a part of the light-emitting unit is disposed to the accommodating portion. The accommodating portion has a light incident surface, and the ratio of a distance from the light incident surface to the light-emitting unit to a side length of the light-emitting unit is less than 0.5.

In one embodiment, the light-emitting unit is a light-emitting diode (LED) die, a single die LED COB package, a multiple die LED COB package, or a surface mount LED package.

In one embodiment, the lens further includes a first lens portion and a second lens portion. The first lens portion is disposed corresponding to the accommodating portion. The second lens portion is connected to the first lens portion, and has a reflective surface and a side wall connected to each other.

In one embodiment, the lens further includes a first area, a second area and a third area. The first area is disposed corresponding to the accommodating portion. The second area is connected to the first area. The third area is connected to the second area.

In one embodiment, the first lens portion has an indentation, and the light emitted from an outer portion of the light-emitting unit is scattered out of the lens through the first lens portion.

In one embodiment, the light emitted from a center portion of the light-emitting unit is reflected by the reflective surface, and then goes out of the lens through the side wall.

In one embodiment, the lens further has a bottom surface, and the accommodating portion is disposed to the bottom surface.

In one embodiment, the lens further has a chamfer disposed to the intersection of the bottom surface and the side wall, and the partial light emitted by the light-emitting unit is reflected by the chamfer and then refracted or reflected by the side wall.

In one embodiment, the bottom surface has an incline which is connected to the chamfer.

In one embodiment, the second lens portion further includes a convex lens, a concave lens or an irregular lens, which is disposed between the reflective surface and the side wall.

In one embodiment, the side wall has a matte surface.

In one embodiment, the side wall has a plurality of concave lenses, a plurality of convex lenses or their combination.

In one embodiment, the light incident surface includes a curved surface or a flat surface.

In one embodiment, when the light incident surface is a cambered surface, the ratio of the curvature radius of the light incident surface to the side length of the light-emitting unit is larger than 0.5.

In one embodiment, the smallest distance between the light incident surface and the light-emitting unit is between 0 and 0.5mm.

In one embodiment, the light-emitting angle of the lens is between 0 and 180°.

In one embodiment, the lens has a circular form or a bar-shaped form.

As mentioned above, the light-emitting apparatus according to this disclosure includes a lens, and the lens and the light-emitting unit are disposed with a near-field design wherein the ratio of a distance from the light incident surface to the light-emitting unit to a side length of the light-emitting unit is less than 0.5. Therefore, the light-emitting unit can be regarded as an area light source, and the lights emitted from different portions of the light-emitting unit can be refracted or reflected in different angles by the lens. Thereby, the light-emitting apparatus is capable of large viewing angle. Accordingly, when the light-emitting apparatus of this disclosure is applied to the direct-type backlight module or the lamp box, the number of the required light-emitting units can be decreased and also the cost can be decreased. More importantly, the thickness of the lens can be decreased, and even the thickness of the backlight module or whole system can be decreased.

### BRIEF DESCRIPTION OF THE DRAWINGS

The invention will become more fully understood from the detailed description and accompanying drawings, which are given for illustration only, and thus are not limitative of the present invention, and wherein:

FIG. 1A is a perspective sectional diagram schematically showing a light-emitting apparatus according to an embodiment of this disclosure;

FIG. 1B is a schematic sectional diagram of the light-emitting apparatus in FIG. 1A;

FIG. 1C is a perspective sectional diagram schematically showing a light-emitting apparatus according to an embodiment of this disclosure;

FIG. 1D is a schematic diagram showing the optical path of the light emitted by the light-emitting unit passing through the first lens portion according to an embodiment of this disclosure;

FIG. 1E is a schematic diagram showing the optical path of the light emitted by the light-emitting unit passing through the second lens portion according to an embodiment of this disclosure;

FIG. 1F is a schematic diagram showing the optical path of a light-emitting apparatus according to an embodiment of this disclosure;

FIG. 2 is a schematic diagram showing the light shape of a light-emitting apparatus according to an embodiment of this disclosure;

FIG. 3A is a schematic sectional diagram of a light-emitting apparatus according to an embodiment of this disclosure;

FIG. 3B is a schematic diagram showing the optical path of the light emitted by the light-emitting unit of the light-emitting apparatus in FIG. 3A passing through the third area;

FIG. 4 is a schematic sectional diagram of a light-emitting apparatus having a different central top portion according to an embodiment of this disclosure;

FIGS. 5A to 5C are schematic sectional diagrams of different lenses of a light-emitting apparatus according to an embodiment of this disclosure; and

FIGS. 6A and 6B are schematic top-view diagrams of different light-emitting apparatuses according to an embodiment of this disclosure;

FIG. 7 is a schematic sectional diagram of a variation of the light-emitting unit of a light-emitting apparatus according to an embodiment of this disclosure; and

FIGS. 8A and 8B are schematic sectional diagrams of some variations of a light-emitting apparatus according to an embodiment of this disclosure.

### DETAILED DESCRIPTION OF THE INVENTION

The present invention will be apparent from the following detailed description, which proceeds with reference to the accompanying drawings, wherein the same references relate to the same elements.

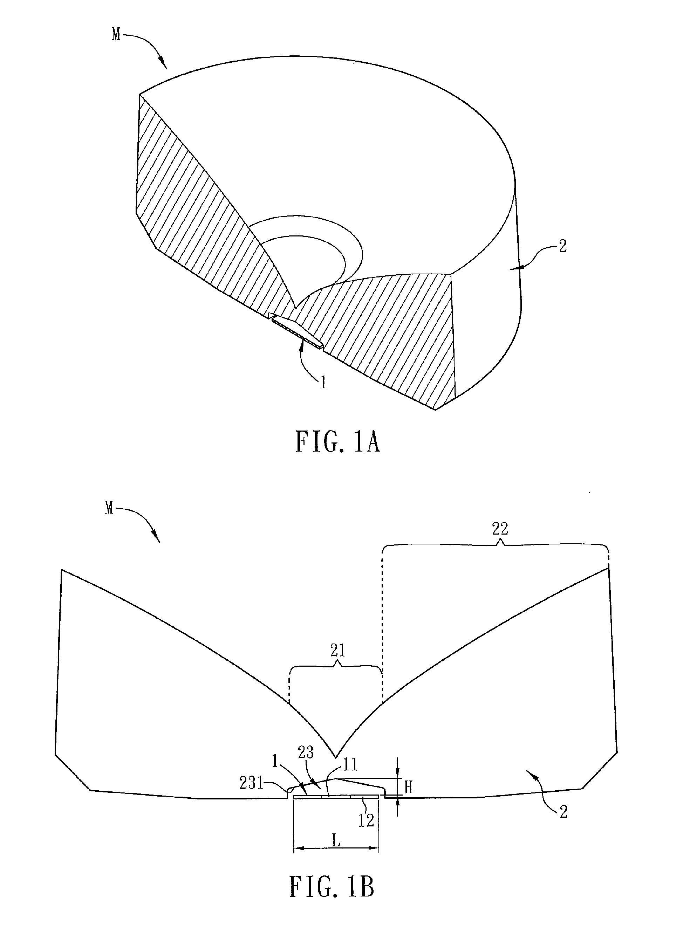

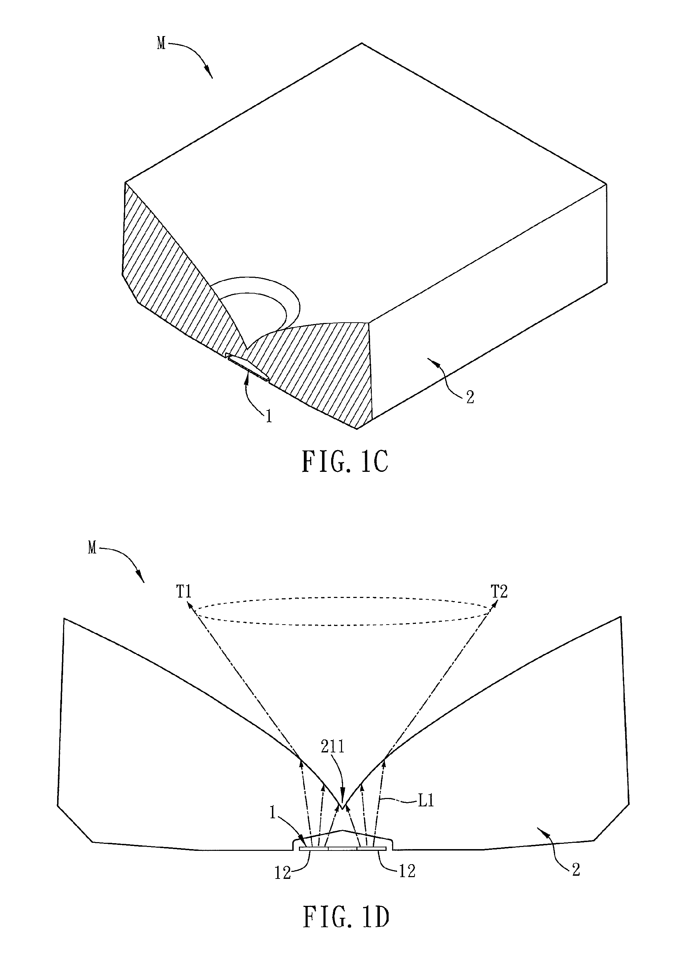

FIG. 1A is a perspective sectional diagram schematically showing a light-emitting apparatus according to an embodiment of this disclosure, and FIG. 1B is a schematic sectional diagram of the light-emitting apparatus in FIG. 1A. As shown in FIGS. 1A and 1B, the light-emitting apparatus M includes at least one light-emitting unit 1 and a lens 2. The lens 2 covers the light-emitting unit 1. In this embodiment, the light-emitting apparatus M just includes a light-emitting unit 1, but this disclosure is not limited thereto. Otherwise, the light-emitting apparatus M can include two or more light-emitting units for increasing the whole luminous intensity. The light-emitting apparatus M is a direct-type backlight module and has a circular form, for example, but this disclosure is not limited thereto. Otherwise, as shown in FIG. 1C, the light-emitting apparatus M has a bar-shaped structure, and can function as a lighting apparatus or a lamp box. The elements of the light-emitting apparatus M are respectively illustrated as below.

The light-emitting unit 1 is a surface mount LED package for example. Otherwise, it can be an LED die, a single die LED COB package or a multiple die LED COB package. However, this disclosure is not limited thereto. In this embodiment, the light-emitting unit 1 has an LED die for example. However, the number of the LED die is not limited in this disclosure. For example, the light-emitting unit 1 can be a package having two or more LED dies, according to the luminous effect required for the light-emitting apparatus M.

The lens 2 has an accommodating portion 23, which is a concave structure. At least a part of the light-emitting unit 1 is disposed in the accommodating portion 23, and here it is totally disposed in the accommodating portion 23 for example. The accommodating portion 23 has a light incident surface 231. The light-emitting unit 1 is disposed on the side of the light incident surface 231, and emits the light into the lens 2 through the light incident surface 231. In this embodiment, the accommodating portion 23 is used to accommodate the light-emitting unit 1. The light incident surface 231 is a curved surface, but this disclosure is not limited thereto. Otherwise, the light incident surface 231 can be a cambered surface or a flat surface, according to the structure required for the light-emitting apparatus M.

Accordingly, the light-emitting unit 1 is disposed to the accommodating portion 23 by a short distance, and therefore the lights emitted from the different portions of the light-emitting unit 1 can have different paths. In detail, the ratio of a distance H from the light incident surface 231 to the light-emitting unit 1 to a side length L of the light-emitting unit 1 is less than 0.5. Herein, the distance H from the light incident surface 231 to the light-emitting unit 1 denotes the average or nearest distance from the light output surface of the light-emitting unit 1 to the light incident surface 231. The side length L denotes the average side length or the diameter. By disposing the light-emitting unit 1 and the lens 2 with such near-field design, the light-emitting zone of the light-emitting unit 1 can be divided into a center portion 11 and an outer portion 12, and the center portion 11 and outer portion 12 can emit the lights into different portions of the lens 2 for adjusting the light output uniformity and scattering angle of the light-emitting apparatus M. Herein for example, the cross-section of the light-emitting unit 1 is equally divided into three parts, and the center part is the center portion 11 while the two outer parts are the outer portions 12. However, this disclosure is not limited thereto. In other embodiments, when the light-emitting unit has two or more dies, the light-emitting unit, from the physical center to the farthest end thereof, can be divided into two parts for differentiating the center portion and the outer portion.

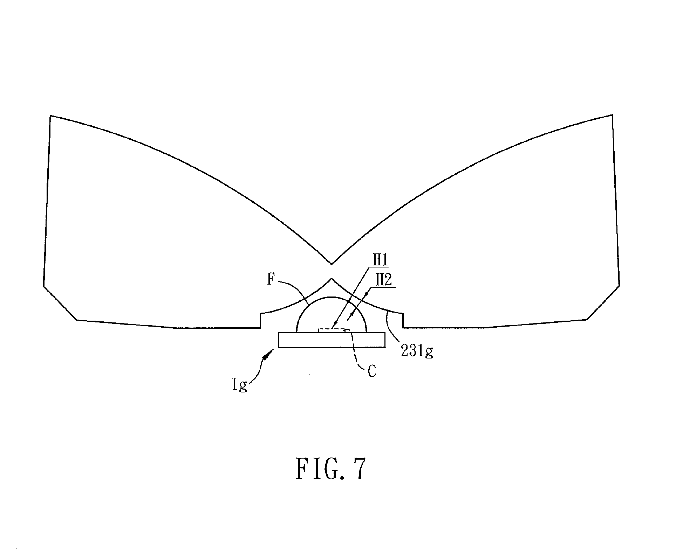

In other embodiments, as shown in FIG. 7 for example, when the light-emitting unit 1g is an LED package including a secondary lens F and an LED chip C, the distance from the light incident surface 231g to the light-emitting unit 1g is the nearest distance H1 from the light output surface of the LED chip C to the light incident surface 231g or the nearest distance H2 from the secondary lens F to the light incident surface 231g.

To be noted, in this embodiment, when the light incident surface 231 is a curved surface, the ratio of the curvature radius thereof to the side length L of the light-emitting unit 1 is larger than 0.5. However, this value can be adjusted according to the size of the light-emitting unit 1, the distance H from the light incident surface 231 to the light-emitting unit 1 and the luminous requirement of the light-emitting apparatus M.

When the lights are emitted from different portions of the light-emitting unit 1, they can be reflected or refracted by different regions of the lens 2 and then outputted from the lens 2. In detail, the light-emitting apparatus M further includes a first lens portion 21 and a second lens portion 22. The first lens portion 21 is corresponding to the accommodating portion 23, and disposed opposite to the accommodating portion 23 for example. The second lens portion 22 is connected to the first lens portion 21. The lens 2 is further illustrated as below.

FIG. 1D is a schematic diagram showing the optical path of the light emitted by the light-emitting unit passing through the first lens portion. As shown in FIG. 1D, the first lens portion 21 has an indentation 211, and the outer portion 12 of the light-emitting unit 1 emits the light into the first lens portion 21. The first light L1 from the outer portion 12 is refracted by the light incident surface 231 and then scattered outwards by the indentation 211 of the first lens portion 21. In detail, the first light L1 is refracted by the first lens portion 21 and then outputted towards the region over the lens 2, such as the taper region bounded by the dot-dashed lines T1 and T2 in FIG. 1D. Thereby, the light of the outer portion 12 with weaker luminous intensity can be used to satisfy the requirement of the backlight module that requires the light of weaker luminous intensity for the central viewing angle.

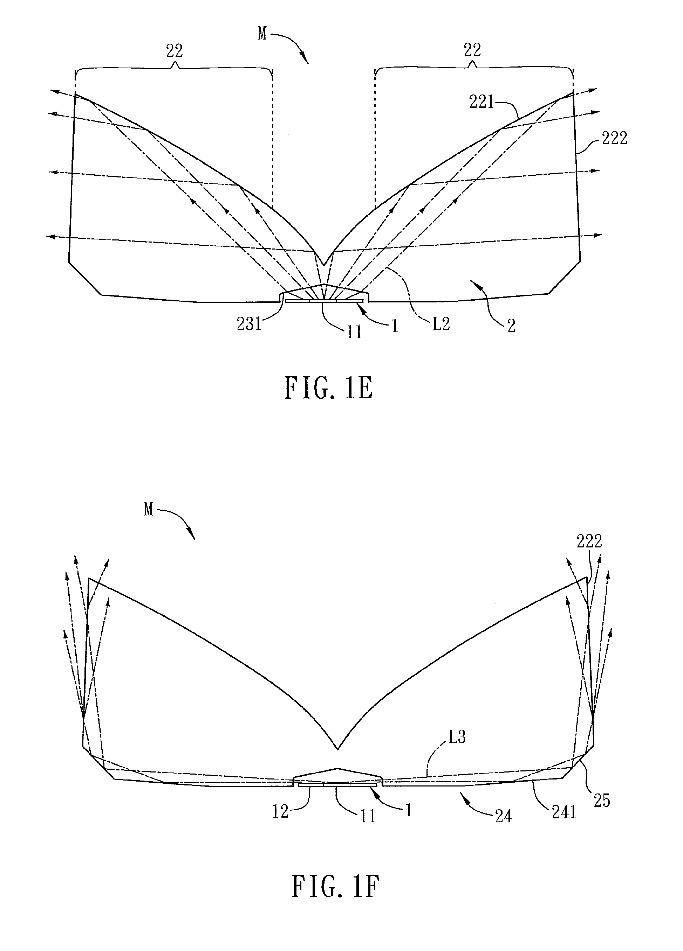

FIG. 1E is a schematic diagram showing the optical path of the light emitted by the light-emitting unit passing through the second lens portion. As shown in FIG. 1E, the second lens portion 22 is connected to the first lens portion 21, and has a reflective surface 221 and a side wall 222 connected to each other. The second light L2 emitted from the center portion 11 of the light-emitting unit 1 is refracted by the light incident surface 231, then reflected by the reflective surface 221 of the second lens portion 22 through the total internal reflection (TIR), and then outputted from the side wall 222. Accordingly, the second lens portion 22 can provide the total internal reflection to the second light L2 emitted from the center portion 11 of the light-emitting unit 1, and thus the light is outputted from the opposite sides of the lens 2. Therefore, the light-emitting angle of the light-emitting unit 1 is increased, and thereby the product requirement of the large viewing angle can be satisfied by the light-emitting apparatus M.

Besides, in the conventional art, the region of uneven intensity and dimness is easily caused at the intersection of the lights emitted by the adjacent light-emitting apparatuses, and this disclosure can prevent this problem. FIG. 1F is a schematic diagram showing the optical path of a light-emitting apparatus according to an embodiment of this disclosure. As shown in FIG. 1F, the lens 2 further has a bottom surface 24 and a chamfer 25. The accommodating portion 23 is disposed to the bottom surface 24, and the chamfer 25 is disposed to the intersection of the bottom surface 24 and the side wall 222. Accordingly, the light of large light-emitting angle (i.e. the third light L3 in FIG. 1F) emitted by the light-emitting unit 1 will undergo the total internal reflection by the chamfer 25, and is then refracted or reflected by the side wall 222, for compensating for the lack of the brightness at the intersection of the adjacent light-emitting apparatuses M. Besides, the bottom surface 24 can further have an incline 241, which can help the chamfer 25 reflect the light of large light-emitting angle emitted by the light-emitting unit 1. Furthermore, the side wall 222 can undergo a surface treatment to obtain a slight matte surface so that the light can be scattered more evenly. By the incline 241 and the chamfer 25, the problem of uneven intensity at the intersection of the adjacent light-emitting apparatuses M can be reduced.

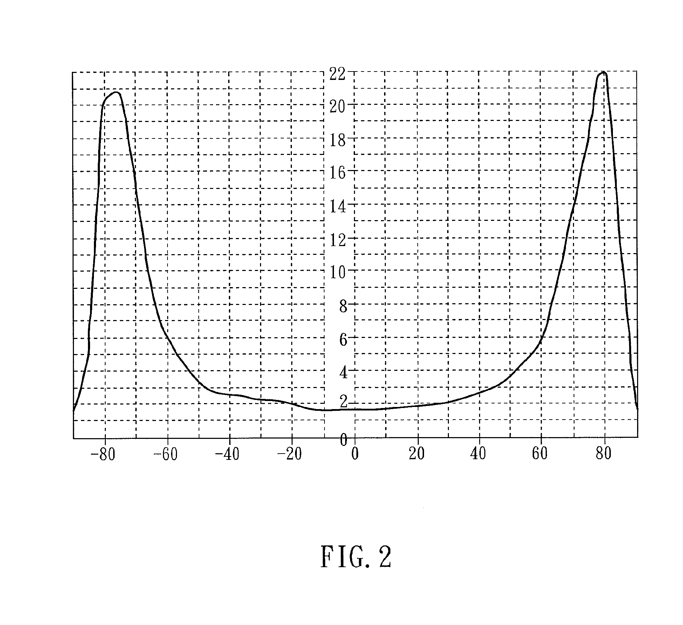

Accordingly, by the designs of the lens 2 and the near-field disposition of the light-emitting unit 1 and the lens 2, the light shape diagram can be provided as shown in FIG. 2. It can be seen from FIG. 2 that the light shape distribution of the light-emitting apparatus M can achieve 180° and the luminous intensity of large light-emitting angle is far larger than that of small light-emitting angle. Therefore, when the light-emitting apparatuses M are disposed adjacent to each other, their intervals can be increased. Thereby, the utility rate of the light-emitting apparatus M in a unit area can be decreased, and thus the cost is also decreased.

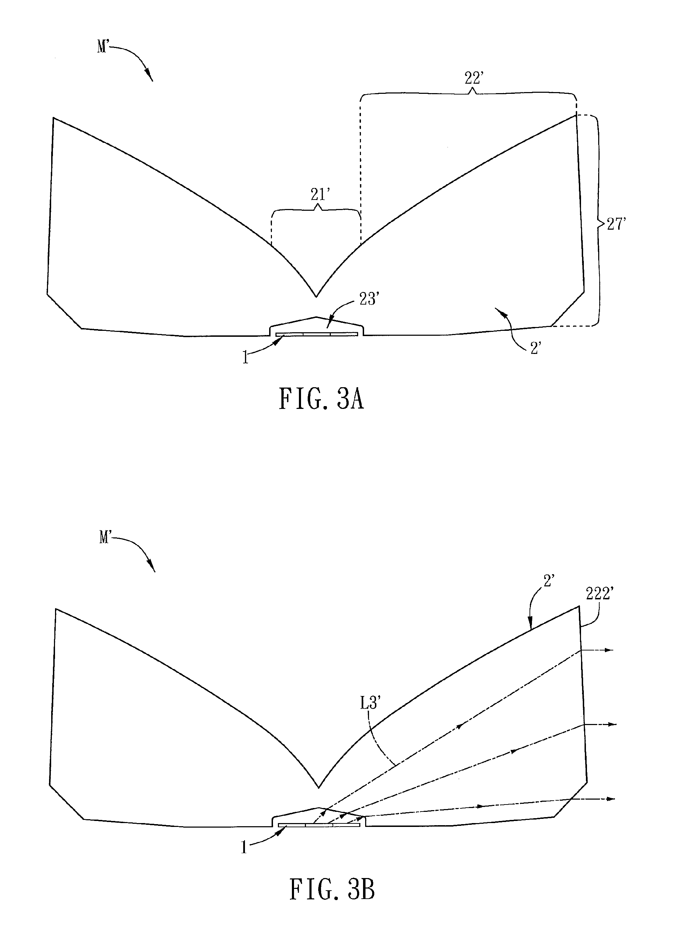

FIG. 3A is a schematic sectional diagram of a light-emitting apparatus according to an embodiment of this disclosure. As shown in FIG. 3A, the light-emitting apparatus M' of this embodiment have similar structure and features to the above-mentioned embodiments, but the lens 2' of the light-emitting apparatus M' is divided into a first area 21', a second area 22' and a third area 27'. The first area 21' is disposed corresponding to the accommodating portion 23' and has an indented upper surface. The second area 22' is connected to the first area 21', and the light emitted by the light-emitting unit 23' is at least partially provided the total internal reflection by the upper surface of the second area 22' and thus emitted out of the third area 27', which is connected to the second area 22'. The first area 21' and the second area 22' have the same optical paths and functions as the above-mentioned first lens portion 21 and second lens portion 22, and therefore they are not described here for concise purpose.

FIG. 3B is a schematic diagram showing the optical path of the light emitted by the light-emitting unit of the light-emitting apparatus in FIG. 3A passing through the third area. As shown in FIG. 3B, the portion of the third area 27' can make the light divergent. Besides, by the disposition of the third area 27', the light (fourth light L3') emitted by the light-emitting unit 1 can be refracted and/or reflected by a side wall 222'.

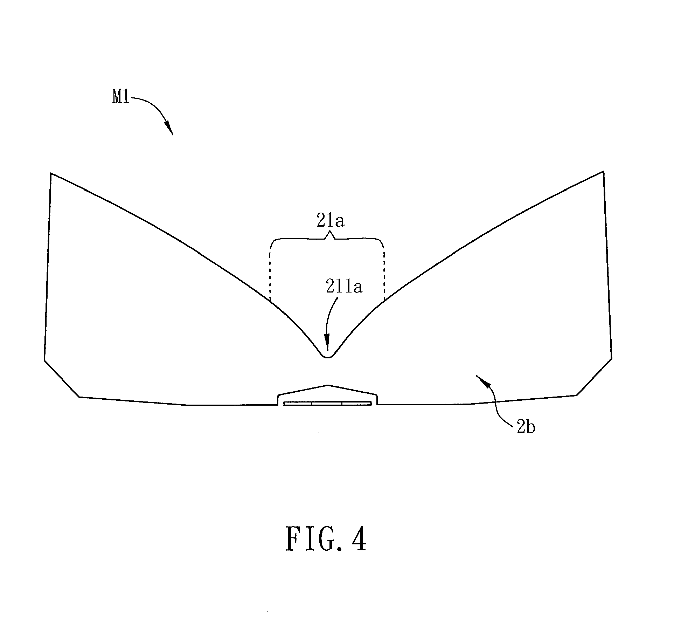

FIG. 4 is a schematic sectional diagram of a light-emitting apparatus having a different central top portion according to an embodiment of this disclosure. The light-emitting apparatus M1 has similar structure and features to the embodiment as shown in FIG. 2. However, the indentation of the first lens portion 21a of the light-emitting apparatus M1 is curviform, and thereby the luminous energy of the first lens portion 21a is increased and also the light shape of this area is further adjusted.

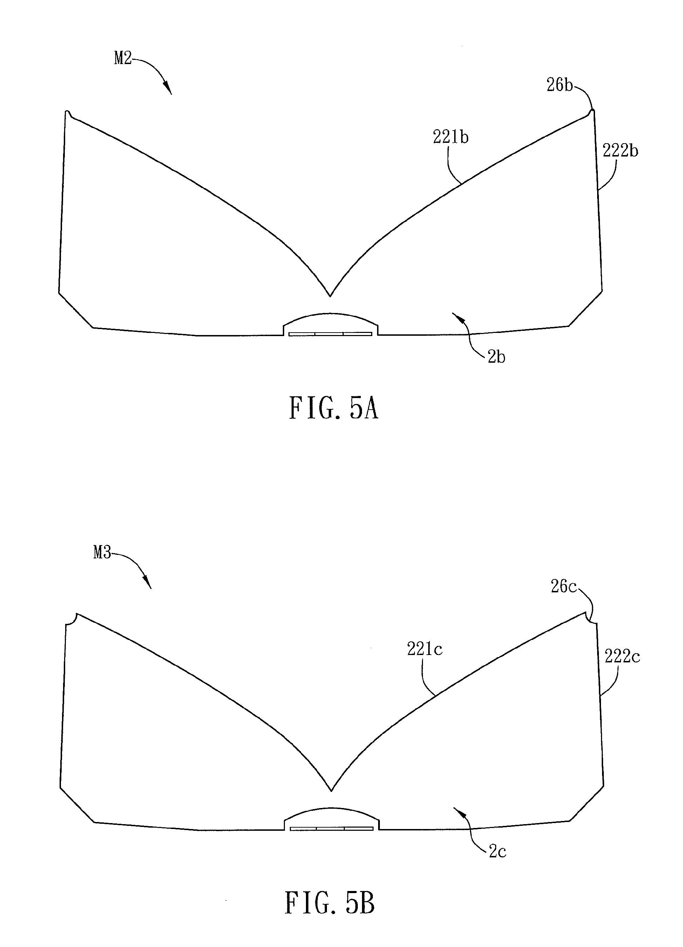

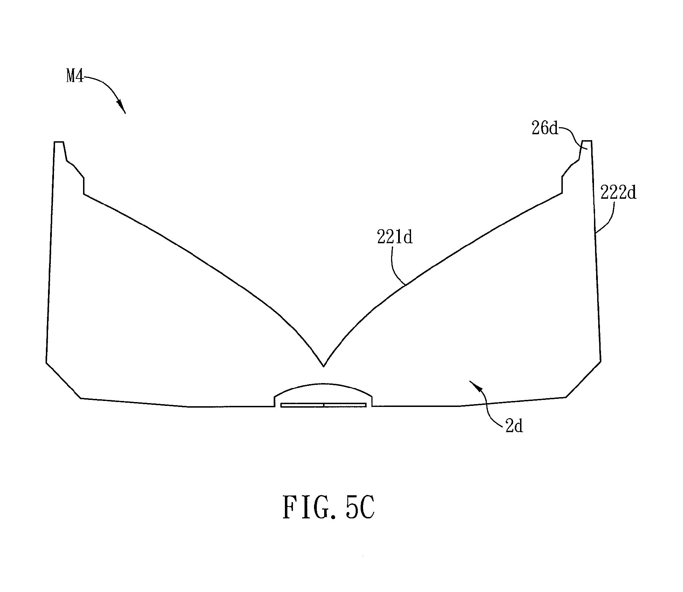

FIGS. 5A to 5C are schematic sectional diagrams of different lenses of a light-emitting apparatus according to an embodiment of this disclosure. The light-emitting apparatuses M2, M3, M4 in FIGS. 5A to 5C have similar structure and features to the foregoing embodiments. However, in the light-emitting apparatuses M2, M3, M4, the connections of the reflective surfaces 221b, 221c, 221d and side walls 222b, 222c, 222d of the lenses 2b, 2c, 2d are slightly changed, respectively. For example, the connections 26b, 26c and 26d are a convex lens, a concave lens and an irregular curved lens, respectively. Thereby, the amount of the light of large light-emitting angle can be increased, and therefore the problem of uneven intensity and dimness at the intersection of the adjacent light-emitting apparatuses can be reduced.

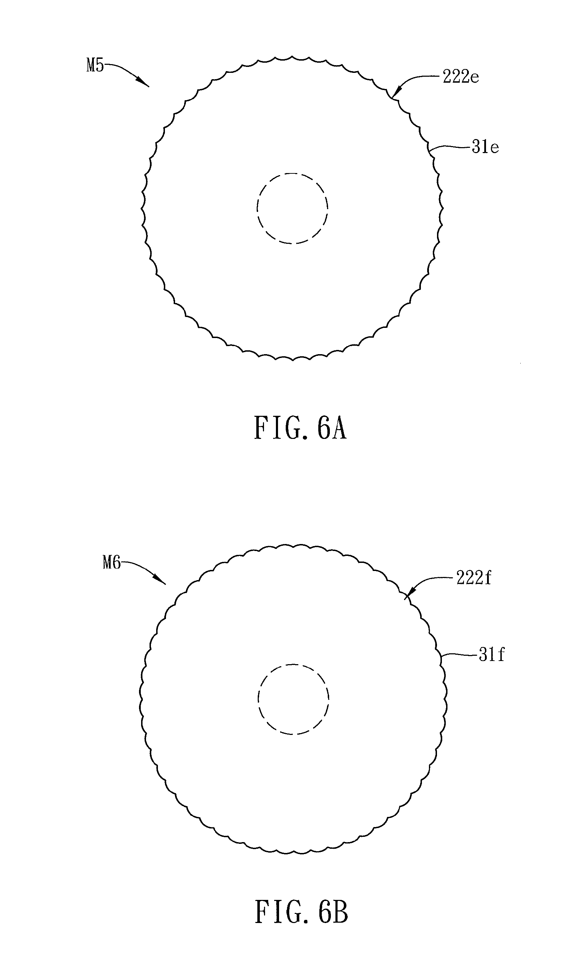

FIGS. 6A and 6B are schematic top-view diagrams of different light-emitting apparatuses according to an embodiment of this disclosure. The light-emitting apparatuses in FIGS. 6A and 6B have similar structure to the foregoing light-emitting apparatus M. However, the side walls of the light-emitting apparatuses in FIGS. 6A and 6B are varied. The side wall 222 of the light-emitting apparatus M in FIG. 1F has a flat and smooth surface, but the side wall 222e of the light-emitting apparatus M5 has a plurality of consecutive concave lenses, and the side wall 222f of the light-emitting apparatus M6 has a plurality of consecutive convex lenses. Otherwise, the side wall of the light-emitting apparatus can have both of the convex and concave lenses, which can be disposed apart from each other.

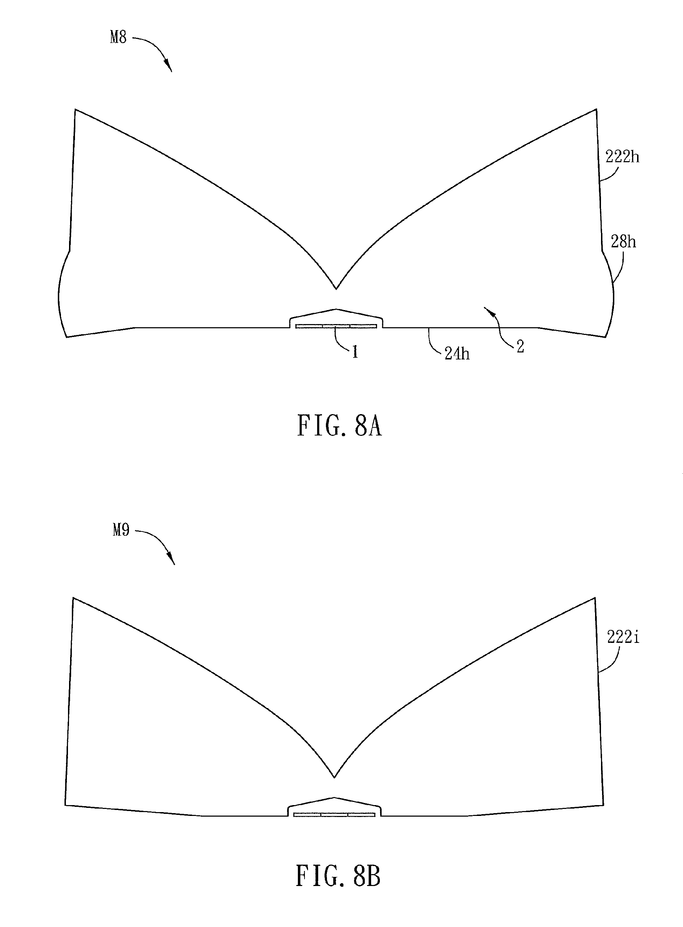

FIGS. 8A and 8B are schematic sectional diagrams of some variations of a light-emitting apparatus according to an embodiment of this disclosure. The structures and components of FIGS. 8A and 8B are almost the same as the embodiment of the light-emitting apparatus M, but differently, the side-wall structure of the light-emitting apparatus of this embodiment is varied. In this embodiment, the lens 2h of the light-emitting apparatus M8 has a protrusion 28h, which is connected to the bottom surface 24h and the side wall 222h. Accordingly, the light emitted by the light-emitting unit 1 will be collected more when passing through the protrusion 28h. Moreover, the side wall 222i of the light-emitting apparatus M9 in FIG. 8B is a flat surface, and the light-emitting apparatus M9 is not configured with a chamfer 25, in comparison with the embodiment of the light-emitting apparatus M.

In summary, the light-emitting apparatus according to this disclosure includes a lens, and the lens and the light-emitting unit are disposed with a near-field design wherein the ratio of a distance from the light incident surface to the light-emitting unit to a side length of the light-emitting unit is less than 0.5. Therefore, the light-emitting unit can be regarded as an area light source, and the lights emitted from different portions of the light-emitting unit can be refracted or reflected in different angles by the lens. Thereby, the light-emitting apparatus is capable of large viewing angle. Accordingly, when the light-emitting apparatus of this disclosure is applied to the direct-type backlight module or the lamp box, the number of the required light-emitting units can be decreased and also the cost can be decreased. More importantly, the thickness of the lens can be decreased, and even the thickness of the backlight module or whole system can be decreased.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. A light-emitting apparatus, comprising:
at least a light-emitting unit; and
a lens having an accommodating portion, wherein at least a part of the light-emitting unit is disposed to the accommodating portion, the accommodating portion has a light incident surface, and the ratio of a distance from the light incident surface to the light-emitting unit to a side length of the light-emitting unit is less than 0.5.

2. The light-emitting apparatus as recited in claim 1, wherein the light-emitting unit is a light-emitting diode (LED) die or a surface mount LED package.

3. The light-emitting apparatus as recited in claim 1, wherein the lens further includes:
a first lens portion disposed corresponding to the accommodating portion; and
a second lens portion connected to the first lens portion and having a reflective surface and a side wall connected to each other.

4. The light-emitting apparatus as recited in claim 1, wherein the lens further includes:
a first area disposed corresponding to the accommodating portion;
a second area connected to the first area; and
a third area connected to the second area.

5. The light-emitting apparatus as recited in claim 3, wherein the first lens portion has an indentation, and the light emitted from an outer portion of the light-emitting unit is scattered out of the lens through the first lens portion.

6. The light-emitting apparatus as recited in claim 3, wherein the light emitted from a center portion of the light-emitting unit is reflected by the reflective surface, and then goes out of the lens through the side wall.

7. The light-emitting apparatus as recited in claim 3, wherein the lens further has a bottom surface, and the accommodating portion is disposed to the bottom surface.

8. The light-emitting apparatus as recited in claim 7, wherein the lens further has a chamfer disposed to the intersection of the bottom surface and the side wall, and the partial light emitted by the light-emitting unit is reflected by the chamfer and then refracted or reflected by the side wall.

9. The light-emitting apparatus as recited in claim 8, wherein the bottom surface has an incline which is connected to the chamfer.

10. The light-emitting apparatus as recited in claim 3, wherein the second lens portion further includes a convex lens, a concave lens or an irregular lens, which is disposed between the reflective surface and the side wall.

11. The light-emitting apparatus as recited in claim 3, wherein the side wall has a plurality of concave lenses, a plurality of convex lenses or their combination.

12. The light-emitting apparatus as recited in claim 1, wherein the light incident surface includes a curved surface or a flat surface.

13. The light-emitting apparatus as recited in claim 1, wherein when the light incident surface is a cambered surface, the ratio of the curvature radius of the light incident surface to the side length of the light-emitting unit is larger than 0.5.

14. The light-emitting apparatus as recited in claim 1, wherein the smallest distance between the light incident surface and the light-emitting unit is between 0 and 0.5mm.

15. The light-emitting apparatus as recited in claim 1, wherein the lens has a circular form or a bar-shaped form.
